# EUROPEAN PATENT APPLICATION

(11) **EP 4 560 362 A1**
(43) Date of publication of application: **28.05.2025**
(21) Application number: 23212204.4
(22) Date of filing: 27.11.2023
(51) Int. Cl.: G01V 3/12, G06N 20/00

(54) **COMPUTER-IMPLEMENTED METHOD, SYSTEM AND COMPUTER PROGRAM FOR DETECTING THE PRESENCE OF METAL IN AN OBJECT**

(71) Applicant: Mettler-Toledo Safeline Ltd., Manchester M50 2XD (GB)
(72) Inventor: YANG, Tao, Manchester M34JA, Greater Manchester (GB)
(74) Representative: Leinweber & Zimmermann

(57) **Abstract**

The present invention relates to a computer-implemented method for detecting the presence of metal in an object (100) transported, preferably by a belt conveyor (101), along a transport path through a metal detector unit (10), said method comprising: providing detection data to electronic data processing means (20), said detection data being created by the metal detector unit (10), the metal detector unit (10) comprising a source unit (11) for an electromagnetic field and a receiver unit (12) electromagnetically coupled thereto, wherein said source unit (11), said receiver unit (12) and said transport path are arranged relative to each other so as to output an electrical signal dependent on a metal content within said object (100), said metal detector unit (10) being further operative to derive said detection data from said electrical signal; processing the provided detection data by a metal detection software module executed by the electronic data processing means (20, 331, 421), said metal detection software module comprising a first machine learning module (22) receiving said detection data as an input and having been trained to automatically identify the presence of metal in the object (10) on the basis of said detection data, said first machine learning module (21) being further configured to output identification data indicative of the presence of metal identified by said first machine learning module (22), and to a system and to a computer program for detecting the presence of metal in an object (100).

## Description

### Technical Field

The present invention relates to a computer-implemented method, a system and a computer program for detecting the presence of metal in an object.

### Background Art

Detecting the presence of metal in an object is of importance in various industries, for example in the food and pharmaceutical industry. There, metal detectors are used to detect metal contaminants in edible goods and other products, thereby improving product safety.

One example of a system for detecting the presence of metal in an object known in the art comprises a metal detector unit with a source unit for an electromagnetic field and a receiver unit electromagnetically coupled thereto, and transport means, for example a belt conveyor or transport by gravity fall, to transport the object along a transport path through the metal detector unit. The source unit, the receiver unit and the transport path are arranged relative to each other so as to output an electrical signal dependent on a metal content within said object, and said metal detector unit is further operative to derive detection data for further data processing from said electrical signal. Such metal detection systems are disclosed, for example, in US 8,841,903 B2 and US 10,989,829 B2. The detection data may be provided for further data processing to electronic data processing means. The electronic data processing means executes a discrimination algorithm, e.g., a distance-based discrimination algorithm (see for example EP 2 625 551 A1 or EP 3 726 256 A1), configured to detect the presence of metal in the object on the basis of said detection data.

Conventional metal detectors are usually deployed standalone, however in the context of loT and deep learning, metal detectors will communicate with each other and even with a central server, which enables more powerful functionalities and capabilities.

The detection of smaller and smaller metal contaminants in an object is a common theme in the metal detection industry. However, a trade-off is often necessary between the sensitivity of the detector unit, i.e., its discrimination accuracy and a false alarm due to product effect, i.e., the said object under inspection may give rise to a more significant signal than that of a small metal contaminant. It is thus an object of the present invention to provide a method, a system and a computer program for detecting the presence of metal in an object which provide a high performance, in particular a high discrimination accuracy.

### Summary of invention

According to a first aspect of the present invention, there is provided a computer-implemented method for detecting the presence of metal in an object transported, preferably by a belt conveyor, along a transport path through a metal detector unit, said method comprising: providing detection data to electronic data processing means, said detection data being created by the metal detector unit, the metal detector unit comprising a source unit for an electromagnetic field and a receiver unit electromagnetically coupled thereto, wherein said source unit, said receiver unit and said transport path are arranged relative to each other so as to output an electrical signal dependent on a metal content within said object, said metal detector unit being further operative to derive said detection data from said electrical signal; processing the provided detection data by a metal detection software module executed by the electronic data processing means, said metal detection software module comprising a first machine learning module receiving said detection data as an input and having been trained to automatically identify the presence of metal in the object on the basis of said detection data, said first machine learning module being further configured to output identification data indicative of the presence of metal identified by said first machine learning module.

According to the first aspect of the present invention, detection data created by the metal detector unit is provided to the electronic data processing means for data processing. The metal detector unit comprises a source unit for an electromagnetic field. That is, the source unit may be configured to create an electromagnetic field. The electromagnetic field may comprise an electric and/or a magnetic field component. In one example, the electromagnetic field may be a static electromagnetic field. The static electromagnetic field may be a static magnetic field. A static magnetic field may be used, for example, in ferrous-in-foil detection. In another example, the electromagnetic field may be a time-dependent electromagnetic field with a time-dependent electric field component and a time-dependent magnetic field component. A time-dependent electromagnetic field may be used, for example, in combination with a balanced coil system, as it is further outlined below. In one example, the source unit may comprise a coil, and an alternating current may be applied to said coil to thereby create a time-dependent electromagnetic field. In one example, the metal detector unit may comprise a multi-frequency detector as it is disclosed, e.g., in EP 3 521 863 A1.

The metal detector unit further comprises a receiver unit electromagnetically coupled to the source unit. In one example, the receiver unit may comprise at least one coil electromagnetically coupled to the source unit. In one example, the receiver unit may comprise two coils in a balanced coil arrangement. Said source unit, said receiver unit and said transport path are arranged relative to each other so as to output an electrical signal dependent on a metal content within said object. Preferably the receiver unit may output the electrical signal. The electrical signal may be created, for example, by induction, in at least one coil of the receiver unit when the object is transported through the metal detector unit. The electrical signal may comprise a time-dependent voltage signal and/or a time-dependent current signal in one example.

The detector unit is further operative to derive detection data from said electrical signal. The detection data is used for further data processing. The detection data may preferably comprise data of the digitised electrical signal, for example, a digitised voltage signal or a digitised current signal. Additionally or alternatively, the detection data may comprise impedance data. Additionally or alternatively, the detection data may comprise a time series of data points which are the real part and the imaginary part of a phasor expression of a function of said electrical signal at different points in time. In one example, said phasor expression may be of the form *V*₀*e*^{*i*(*ωt*+*φ*)}, wherein V₀ is a voltage amplitude, *ω* a frequency, *t* the time and *φ* a phase.

In one example, the detection data may be derived from the electrical signal via signal processing. Said signal processing may comprise amplification, filtering and phase-sensitive demodulation, but it is not limited to this. The signal processing may also comprise digital signal processing in one example. The digital signal processing may be carried out with the help of the electronic data processing means and/or additional electronic data processing means different from the electronic data processing means.

The electronic data processing means may comprise a classical computer in one example. The electronic data processing means may be located at the same location as the metal detector unit in one example. However, the electronic data processing means may also be located at a location remote from the metal detector unit in another example. I.e., the metal detector unit may be an edge metal detector unit and the electronic data processing means may be or may be part of a cloud remote server. In one embodiment, the electronic data processing means may comprise a plurality of electronic data processing means located at a plurality of different locations, e.g., for use of distributed training of a machine learning module explained below. The detection data may preferably be provided to the electronic data processing means via a network connection. In another example, the metal detector unit may be operative to output the detection data to a portable data carrier, for example, a portable hard disc, for example, an USB-stick. This electronic data carrier may then be transported to the electronic data processing means and the electronic data processing means may be operative to receive the detection data from the portable data carrier as an input.

According to the method of the first aspect of the present invention, the detection data provided to the electronic data processing means is processed by a metal detection software module executed by the electronic data processing means. The metal detection software module comprises a first machine learning module. The metal detection software module may comprise further software modules, for example, software modules for inputting and outputting data in one example, or it may consist only of the first machine learning module in another example. The first machine learning module receives said detection data as an input and has been trained to automatically identify the presence of metal in the object on the basis of said detection data. The first machine learning module may have been trained by machine learning, for example on the basis of a deep learning model. The first machine learning module may comprise a discrimination algorithm that has been generated by machine learning via the use of training data in one example. The discrimination algorithm may receive the detection data as an input and output data, e. g. the identification data, indicative of the presence of metal identified by said first machine learning module. Any type of machine learning may be used to generate the discrimination algorithm of the first machine learning module. For example, supervised learning with labelled training data may be used. Additionally or alternatively, unsupervised learning with unlabelled training data may be used. Concrete examples of the training data and the employed training method will be outlined below.

The first machine learning module receives the detection data as an input and outputs identification data indicative of the presence of metal identified by said first machine learning module. That is, the first machine learning module establishes an input-output relation between the provided detection data and the identification data. The identification data may comprise any data which allows to indicate the presence of metal. The identification data may further include data associated to the size and/or location and/or type of metal, etc. The identification data may be preferably output by the metal detection software module. The output identification data may be communicated to a digital output unit configured to output the identification data in a format comprehensible for a human user. E. g., in one example, the digital output unit may comprise a display unit, e. g. a screen and the identification data may be visualized on said display unit. In another example, the output unit may comprise an audio output unit and an alarm may be triggered when metal is detected in the object.

While many conventional discrimination algorithms are not complicated enough to take into account a large variance of detection data, the first machine learning module according to the first aspect of the present invention is capable of extracting discriminative patterns from intricate detection data which gives rise to a high sensitivity whilst countenancing variations of the detection data. Thus, the computer-implemented method according to the first aspect of the present invention allows for the detection of small metal contaminants in an object which would not be possible with computer-implemented methods known in the art.

In one embodiment of the method according to the first aspect of the present invention, said training may comprise creating said detection data at a remote location, and communicating the created detection data to a host location where it is used as training data for machine learning to thereby train the first machine learning module. The remote location may be an edge location and said metal detector unit may be an edge metal detector unit in one example. Said first machine learning module may be deployed to the electronic data processing means. According to this embodiment, the detection data may be created at a remote location, e.g. the edge location, by the metal detector unit described above when training objects are transported through the metal detector unit. The metal detector unit may be understood as an edge device, and creating the detection data may be understood as an edge stage. The metal detector unit at the remote location may be accelerated by a tensor processing unit (TPU), a specially designed chip for neural network machine learning desired computation. The metal detector unit may be installed in a production line of a customer's factory and may create the detection data. The created detection data will then be communicated to a host location where it is used as training data for machine learning to thereby train the first machine learning module. The host location may be a cloud location in one example. For example, the detection data may be communicated through a network, e. g., the internet or an intranet or via a portable hard drive. The training may be executed by a host computing unit which may be or may be part of a cloud server in some examples. Machine learning may comprise the design of the first machine learning module and its training in one example. For example, a research team may design at least one deep neural network model and train the at least one model using the training data in a cloud computer cluster. When the computation is finished, an optimal deep neural network may be selected from the trained models, e. g., via validation using validation data. This process may be repeated iteratively. The first machine learning module, e.g., the deep neural network, trained by machine learning may then be deployed to the electronic data processing means used in the computer implemented method for detecting the presence of metal in the object according to the first aspect of the present invention.

Alternatively, one may carry out training of the first machine learning module at or near the location of the metal detector unit, e.g., on the factory site in one example, e.g., at the edge location. In one embodiment, the metal detector unit, the electronic data processing means used for processing the provided detection data and the training may be all carried out at the same, i. e., the remote location, e.g., the edge location. In this case, the training, i. e. edge training, may happen in individual detectors comprising the metal detector unit and the electronic data processing means in a factory. After the first machine learning module, for example, a deep neural network, has been trained, edge inference may be conducted for the metal detection task. I. e., the presence of metal in an object may be detected by using the trained first machine learning module.

Alternatively, heavy computation may only be carried out in the cloud in one embodiment, I. e., the detection data created by the metal detector unit may be communicated to a cloud computer in real time. Then the training and inference process may be carried out in the cloud computer. Thus, the cloud computer may provide a remote service to the metal detector unit to enable metal detection.

In a further embodiment of the method according to the first aspect of the present invention, said first machine learning module may comprise a neural network, preferably a deep neural network, trained for the automatic identification of the presence of metal in the object on the basis of said detection data by using labelled training data. I. e., according to this embodiment, the detection data provided to the metal detection software module is provided as an input to the neural network, and the neural network outputs the identification data indicative of the presence of metal identified by said neural network. The neural network may be a deep neural network in one example. According to this embodiment, the neural network may be trained by using labelled training data. The labelled training data may comprise the detection data created at the remote location as outlined above.

Due to the availability of big data and the development of sophisticated deep neural network architectures, it is possible to push the boundary of industrial metal detection further and achieve a detection sensitivity which was not attainable before. In particular, many conventional algorithms are not complex enough to take into account a large variance of detection data. Deep neural networks, on the other hand, are capable of extracting discriminative patterns for intricate detection data, which gives rise to a high sensitivity whilst countenancing variations of the detection data. For example, a deep neural network architecture may allow to achieve a 20 % improvement on average in terms of sensitivity compared to conventional algorithms. For example, a deep neural network which has an attention mechanism that is able to activate a subset of the detection data which is discriminative and ignores another subset of the detection data which has confusing variances may be used in one example of the computer implemented method according to the first aspect of the present invention.

In one embodiment, said labelled training data may comprise metal-free training data associated to at least one metal-free training object and/or metal training data associated to at least one metal-containing training object, wherein the metal-free training data may comprise the detection data derived by the metal detector unit when the at least one metal-free training object is transported through the metal detector unit and/or wherein said metal training data may comprise synthetic data created by a training data generation software module. I. e., the metal-free training data may be generated by providing at least one metal-free training object to the metal detector unit described above. The metal-free training data may then comprise the derived detection data of the metal detector unit described above. Additionally, the metal-free training data may comprise data indicating that the metal-free training data was derived from a metal-free object. The training data generation software module may be operative to generate synthetic detection data associated to objects with metal contaminants. For example, the training data generation software module may be configured to receive detection data of metal-free objects, e.g., the metal-free training data as an input and to output metal training data. By superposing the metal-free training data with the metal-containing training data, the training data is augmented to multiple classes. In this way, supervised deep learning with data of different classes may be realized.

In another embodiment of the method according to the first aspect of the present invention, said neural network may be further configured to generate an activation mask for the detection data which indicates an activation level at each instance of the detection data to thereby predict the position of metal in the object. I. e., the neural network may comprise a plurality of layers and the last but two layer of said neural network can be, but not limited to, a global average pooling layer, whose output connects to a fully connected layer. An activation mask can be generated from the inputs and the weights of these layers, which indicates the activation level of every input point of the network with respect to a classification label. For instance, if an input data is classified as metal contaminants, the region in the input with a highest activation level indicates such region contributes most to the classification of contaminants, and therefore the metal contaminant is most likely to exist at that region. In this way, the computer implemented method according to said embodiment allows a prediction of the position of metal contaminants.

In one embodiment of the method according to the first aspect of the present invention, said first machine learning module may further be trained to identify an object class of the object from the detection data and to output object class data indicative of the identified object class. In this way, the first machine learning module is not only able to detect metal in the object, but it is also able to classify the object simultaneously. For example, when the objects are food products, the object classes may be, e. g., "chicken leg", "chicken breast", "chicken drumsticks". The first machine learning module may be trained by using labelled training data, wherein the label is indicative of the object class. This embodiment may be useful when similar objects are produced in one production line, for example chicken legs, chicken breasts and chicken drumsticks. The method according to this embodiment allows to classify the products, i. e., it allows to recognize what the products are. The object class data may be output by the metal detection software module.

In a further embodiment of the first aspect according to the present invention, the metal detector software module may comprise a filter function for applying interference or noise filtering to the provided detection data and/or the first machine learning module may have been trained by using detection data contaminated with interference or noise effects. In this way, the metal detector software module may actively reject the interference or noise introduced by a source adjacent to the metal detector unit. In one example where the first machine learning module comprises a deep neural network for the identification of the presence of metal in the object on the basis of the detection data, a convolutional neural network (CNN) may be used, as it may have filter effects on the detection data provided as an input. In addition, one may contaminate the training data with interference or noise in order to train the deep neural network to work in a noisy environment.

In another embodiment of the method according to the first aspect of the present invention, the method further comprises: collecting operating status data indicative of the operating status of the metal detector unit by a sensor unit; providing said operating status data to an operating status software module executed by the electronic data processing means, said operating status software module comprising a second machine learning module having been trained by machine learning to automatically identify anomalies in said operating status data, wherein said second machine learning module preferably comprises a neural network, more preferably a deep neural network, for said automatic identification of anomalies, said operating status software module being configured to receive said operating status data as an input and to output anomaly data indicative of the presence of an anomaly in said operating status data identified by said operating status module. The sensor unit may comprise at least one sensor. The at least one sensor may comprise a source unit phase sensor, a drive current sensor, a component temperature sensor, etc. These sensors may collect data associated to the operating status of the metal detector unit, e. g., a value of a source unit phase, a drive current, a component temperature (e. g. of a MOSFET switch of the transmitter power drive) and provide the operating status data to an operating status software module executed by the electronic data processing means. The electronic data processing means may comprise first and second electronic data processing means. In one example, the first electronic data processing means may be located at a remote location near the metal detector unit (e. g., in the same factory), e.g., at the edge location and may execute the first machine learning module. The second electronic data processing means may be located at a host location, e.g., the cloud location. For example, the second electronic data processing means may be a cloud computer. Alternatively, a pre-trained deep neural network may be deployed to the first electronic data processing means located near the metal detector unit in order to enable edge computing instead of computation in the cloud. In one embodiment, the second machine learning module may comprise a deep neural network trained to detect anomalies. The above-mentioned embodiment aims at monitoring the operating status and detecting anomalous conditions of the metal detector unit. Such an embodiment may be understood as deep learning-powered metal detection in the context of the internet of things (IoT).

In a further embodiment of the method according to the first aspect of the present invention, connection between said metal detector unit and/or said electronic data processing means and/or said sensor unit and/or said host location may be via a network, preferably a wireless network, to thereby enable an exchange of data, in particular said detection data and/or said training data and/or said identification data and/or said operating status data. This embodiment may comprise detector-to-detector communication and/or remote serving in some examples. A computing unit at the host location (e.g., the cloud location) may be connected to the network in one example. In this way, the method according to the first aspect of the present invention may be used for loT-powered metal detectors.

In one embodiment of the method according to the first aspect of the present invention, said source unit may comprise a transmitter coil to which an alternating current is applied to thereby generate a time-dependent electromagnetic field, said receiver unit may comprise a balanced coil system, said electrical signal may be the difference voltage output of said balanced coil system as a function of time and said detection data may preferably comprise a time series of data points which are the real part and the imaginary part of a phasor expression of a function of said difference voltage signal at different points in time. The metal detection unit according to this embodiment comprises three coils, namely the transmitter coil and two identical receiver coils of the balanced coil system that are wound onto a non-metallic frame, each exactly parallelly with the other. Since the receiver coils, which typically enclose the transmitter coil centred in-between, are identical, an identical voltage is induced in each of them. In order to receive an electrical output signal that is zero when the system is in balance, the first receiver coil is connected in series with the second receiver coil having an inverse sense of winding. Hence, the voltages induced in the receiver coils that are of identical amplitude and inverse polarity are cancelling out one another in the event the system is in balance. However, as soon as a particle of metal passes through the coil arrangement, the electromagnetic field is disturbed first near one receiver coil and then near the other receiver coil. While the particle of metal is conveyed through the receiver coils, the voltage induced in each receiver coil is changed (by nano-volts). This change in balance results in a difference voltage output. The detection data may comprise a time series of data points which are the real part and the imaginary part of a phasor expression of said difference voltage signals at different points in time or a function thereof. For example, the detection data may comprise data points which are the real part and the imaginary part of a phasor expression of the difference voltage signal or the impedance at different points in time.

In one embodiment of the method according to the first aspect of the present invention, a time-dependent input signal may be applied to the source unit to thereby generate a time-dependent electromagnetic field, and wherein said first machine learning module may further be trained to determine a reference phase for said electrical signal depending on said input signal on the basis of said detection data. Preferably, the time-dependent input signal may be a time-dependent electrical input signal, e.g., a time-dependent current. The time-dependent electromagnetic field may depend on the time-dependent input signal. E.g., the electromagnetic field may have the same time-dependence as the input signal. Said first machine learning module may comprise a deep neural network which may determine the reference phase on the basis of the detection data associated to a particular object, with respect to which phase calibration may be carried out. As the reference phase is determined by the first machine learning module, there is no need to calibrate the phase because the deep neural network may determine a phase and calibrate the detection data, respectively the electrical signal, accordingly.

In many existing discrimination algorithms, including multivariate linear regression (MLR) algorithms, the detection data comprises impedance data which is considered as vectors (or points) in a spectral impedance space. A discrimination boundary is calculated based upon the norm (or distance metric) of these vectors. Detection happens when a point falls outside the boundary. Such algorithms are referred to as distance-based discrimination algorithms. An embodiment of the method according to the first aspect of the present invention may comprise a new algorithm that is different from the distance-based algorithms. Namely, according to a further embodiment of the method according to the first aspect of the present invention, said first machine learning module may comprise a probability density function of the metal-free detection data, said probability density function having been generated by machine learning using metal-free training data associated to metal-free objects, said first machine learning module being further operative to calculate a probability value of the probability density function for the received detection data, and wherein the identification data may comprise data representative of the presence of metal in said object if the probability value is above a pre-defined threshold value. In this embodiment the metal-free detection data is considered as a random variable which is drawn from some probability distribution. Therefore, instead of calculating a distance-based boundary, a probability density function for the metal-free detection data is generated by using machine learning. When the detection data created by the metal detector unit is provided to the first machine learning module, the probability for said detection data given said probability density function is calculated. If the calculated probability is lower than the threshold value, a detection is triggered because it is not likely that such detection data stems from the probability density function generated from the metal-free training data. The method according to this embodiment solves the following problems:

First, for the known discrimination algorithms, the user needs to change product settings when the production line changes the product, i. e., the object class of the object to be inspected. According to the above embodiment, objects from different object classes may be inspected at the same time without changing settings when the first machine learning module is trained using detection data from the different object classes without any significant performance degradation because its capability to extract discriminative patterns for intricate detection data. Second, for the known discrimination algorithms it is difficult to estimate the probability of detection or false detection rate. In contrast, this is simpler for the above-mentioned embodiment because it is probability-based.

The probability density function may be any probability density function. Preferred examples are probability density functions from the exponential family, including Gaussian functions. The probability density function may be a mixture function of different components (e. g., different Gaussian function components). For example, a probability density function may be created that allows to detect metal in objects from N > 1 object classes (e. g. "chicken leg" and "chicken breast") by providing a different probability density model function component for each of the N object classes and by training a model function which is the mixture of the N components using training data for the N object classes.

In one embodiment, the generation of the probability density function of the first machine learning model by machine learning may comprise the following steps: providing a probability density model function of the detection data parametrized by a set of model parameters; transporting a plurality of metal-free training objects through the metal detector unit to thereby create metal-free training data comprising the detection data created for the metal-free training objects; determining values of the model parameters so that the probability density function being defined as the probability density model function for said values of the model parameters is in accordance with said metal-free training data and maximize the likelihood; defining the threshold value given the probability distribution function. I.e., the probability density function is estimated given the metal-free training data and the probability density model function. The probability density model function may be any probability density function, e. g., it may be a function from the exponential family including Gaussian functions. In one example, the probability density model function may be a mixture of different probability density model functions, each being parametrized by a set of model parameters. In one example, a neural network may be used to estimate the parameters of the probability density model function given a set of metal-free training data. The threshold value may be determined by a user in accordance with a desired detection accuracy in one example. Determining values of the model parameters may be preferably via maximizing the summed log likelihood of the metal-free training data. If the user desires a specific sensitivity of the metal detector unit, the threshold value may preferably be the probability of detection data of an object with a metal ball of a specific size. If the user desires a generous tolerance of object variation, the threshold value may preferably be the probability of detection data of metal-free objects of some extreme configurations. In known algorithms, a high detection sensitivity and a generous product tolerance are conflicting by nature. This embodiment offers the freedom to achieve a desired balance. Furthermore, as each data point of the detection data may be considered as a random point, the transport speed may not affect the performance of the method. For example, the performance may be the same for a conveyer production line with changeable speed. In addition, as the probability density function may be a mixture model, it may be capable of modelling data from different distributions. As a consequence, the detection data of objects of different object classes may be described by a single probability density function. This is useful for a production line which produces objects from different object classes (e. g. "chicken leg", "chicken breast", "chicken drumstick").

According to a second aspect of the present invention, there is provided a system for detecting the presence of metal in an object, said system comprising: a metal detector unit comprising a source unit for an electromagnetic field and a receiver unit electromagnetically coupled thereto; transport means, preferably a belt conveyor, to transport the object along a transport path through the metal detector unit; wherein said source unit, said receiver unit and said transport path are arranged relative to each other so as to output an electrical signal dependent on a metal content within said object, said metal detector unit being further operative to derive detection data from said electrical signal; electronic data processing means configure to receive said detection data as an input, and to process the provided detection data by execution of a metal detection software module, said metal detection software module comprising a first machine learning module receiving said detection data as an input and having been trained to automatically identify the presence of metal in the object on the basis of said detection data, said first machine learning module being further configured to output identification data indicative of the presence of metal identified by said first machine learning module.

The system according to the second aspect of the present invention may be used to carry out the method according to the first aspect of the present invention. Everything that was said above in relation to the method according to the first aspect of the present invention shall also apply to the system according to the second aspect of the present invention.

According to a third aspect of the present invention, there is provided a computer program for detecting the presence of metal in an object, said object being transported, preferably by a belt conveyor, along a transport path through a metal detector unit, said metal detector unit comprising a source unit for an electromagnetic field and a receiver unit electromagnetically coupled thereto, wherein said source unit, said receiver unit and said transport path are arranged relative to each other so as to output an electrical signal dependent on a metal content within said object, said metal detector unit being further operative to derive detection data from said electrical signal, said computer program comprising instructions which, when the computer program is executed by a computer, cause the computer to carry out the following steps: receiving said detection data as an input; processing the provided detection data by a metal detection software module, said metal detection software module comprising a first machine learning module receiving said detection data as an input and having been trained to automatically identify the presence of metal in the object on the basis of said detection data, said first machine learning module being further configured to output identification data indicative of the presence of metal identified by said first machine learning module.

The computer program according to the third aspect of the present invention may be used in the method according to the first aspect of the present invention and in the system according to the second aspect of the present invention. Everything that was said above in relation to the method according to the first aspect of the present invention shall also apply to the computer program according to the third aspect of the present invention.

### Brief description of drawings

In the following description, the invention will be specified in greater detail by way of example with reference to the drawings. In the drawings,
- Fig. 1: is a schematic view of an embodiment of a system for detecting the presence of metal in an object according to the second aspect of the present invention,
- Fig. 2: is a flow chart of an embodiment of the method for detecting the presence of metal in an object according to the first aspect of the present invention,
- Fig. 3: schematically illustrates a first embodiment wherein the first machine learning module is trained at a host location and deployed to an edge location,
- Fig. 4: schematically illustrates a second embodiment wherein the first machine learning module is trained and executed at a host location,
- Fig. 5: schematically illustrates a third embodiment wherein the first machine learning module is trained at an edge location,
- Fig. 6: is a plot of a first example of detection data associated to a plurality of objects from one object class and the corresponding activation masks,
- Figs 7A, 7B and 7C: are plots of a second example of detection data associated to objects from three different object classes, respectively.

### Description of embodiments

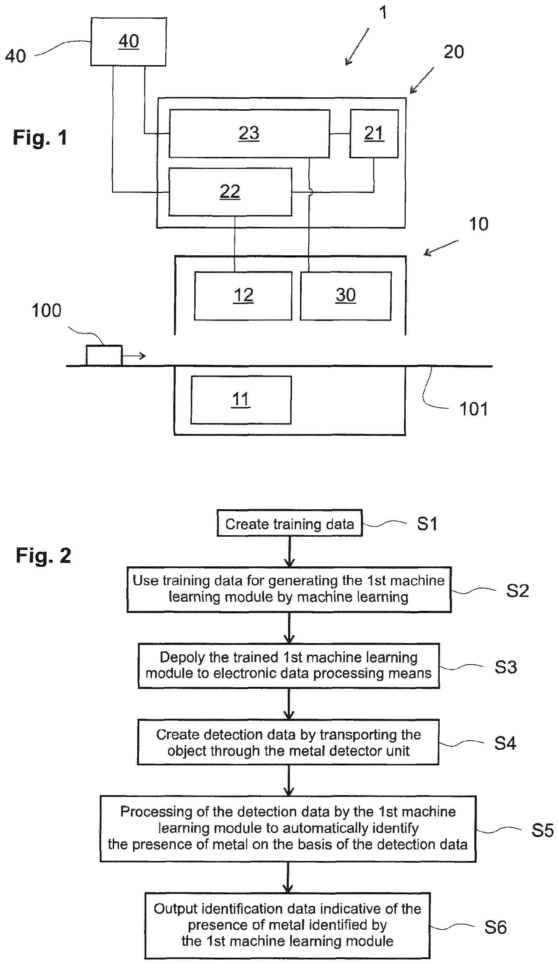

Fig. 1 is a schematic view of an embodiment of a system 1 for detecting the presence of metal in an object 100 according to the second aspect of the present invention. As it is shown in Fig. 1, the system 1 comprises a metal detector unit 10, electronic data processing means 20, and a belt conveyor 101. The object 100 is transported by the belt conveyor 101 along a transport path (direction indicated by the arrow) through the metal detector unit 10.

The metal detector unit 10 comprises a source unit 11 for an electromagnetic field and a receiver unit 12 electromagnetically coupled thereto. In one example, the source unit 11 comprises a transmitter coil to which an alternating current is applied to thereby generate a time-dependent electromagnetic field. In said example, said receiver unit 12 comprises a balanced coil system. The source unit 11, the receiver unit 12 and the transport path are arranged relative to each other so that the receiver unit 12 outputs an electrical signal dependent on a metal content within said object 100. In the example where the receiver unit 12 comprises a balanced coil system, said electrical signal may be the difference voltage output of said balanced coil system as a function of time.

The metal detector unit 10 is further operative to derive detection data from said electrical signal. The detection data is indicative of the presence or absence of metal in the object. In one example, the detection data may comprise the digitized difference voltage signal. In another example, the detection data may be obtained from the difference voltage output after phase sensitive demodulation and a series of signal processing steps, for example, amplification and filtering. In one example, the detection data may comprise impedance data. In one example, the detection data may comprise a time series of data points which are the real part and the imaginary part of a phasor expression of a function of said difference voltage signal at different points in time. In one example, the phasor expression may be a phasor expression of the difference voltage signal. In another example, the phasor expression may be the phasor expression of the impedance derived from said difference voltage signal. The detection data may be derived as it is shown in Fig. 1 by the receiver unit 12. However, the system 1 is not limited to this.

The system 1 further comprises electronic data processing means 20 with a CPU 21. The electronic data processing means 20 is configured to receive said detection data as an input and to process the provided detection data by execution of a metal detection software module. Said metal detection software module comprises a first machine learning module 22 which receives said detection data as an input and which has been trained to automatically identify the presence of metal in the object 100 on the basis of said detection data. The first machine learning module may have been trained by any type of machine learning, including, but not limited to supervised learning and/or unsupervised learning. In one example, said first machine learning module may comprise a neural network, preferably a deep neural network that has been trained to automatically identify the presence of metal in the object 100 on the basis of said detection data. The first machine learning module 22 is further configured to output identification data indicative of the presence of metal identified by said first machine learning module 22. In one example, the identification data may be provided to a display unit 40. Additionally, or alternatively, the identification data may be provided to an audio output unit where an acoustic signal, for example, an alarm, is triggered when the presence of metal is identified in said object 100.

The system 1 may further comprise a sensor unit 30 for collecting operating status data indicative of the operating status of the metal detector unit 10. In Fig. 1, said sensor unit 30 is arranged within the detector unit 10. However, the sensor unit 30 may also be arranged at a different location as long as it allows for collecting operating status data of the metal detector unit 10. The sensor unit 30 may comprise a source unit phase sensor, a drive current sensor, a component temperature sensor, etc. The source unit phase sensor may preferably be configured to measure a phase of an input signal, e. g. an alternating current, of the source unit. The drive current sensor may preferably be configured to measure said alternating current. Said component temperature sensor may be configured to measure the temperature of a component of the metal detector unit 10, e. g., the temperature of the source unit and/or the receiver unit. The collected operating status data may be provided to an operating status software module executed by the electronic data processing means 10, said operating status software module comprising a second machine learning module 23 having been trained by machine learning to automatically identify anomalies in said operating status data. Said second machine learning module 23 may comprise a neural network, preferably a deep neural network for said automatic identification of anomalies from said operating status data. The operating status software module is configured to receive said operating status data as an input and to output anomaly data indicative of the presence of an anomaly in said operating status data identified by said operating status module. The anomaly data may be output, for example, to the display unit 40 where the anomaly data is visualised. In one embodiment which is different from the one shown in Fig. 1, the sensor unit 30 may be adapted to collect operating status data of the metal detector unit 10 and to communicate the operating status data, e. g., via a network, to a cluster computer in which a deep neural network is deployed, said deep neural network having been trained to detect anomalies on the basis of said operating status data. In another example, a pretrained deep neural network may be deployed to the electronic data processing means 20 located near the metal detector unit 10 in order to enable edge computation to thereby detect anomalies in said operating status data.

Fig. 2 is a flow chart of an embodiment of the method for detecting the presence of metal in an object according to the first aspect of the present invention. The method starts at step S1 with the creation of training data. There are several ways to create the training data. The training data may for example comprise labelled training data which may be used for supervised learning. Additionally, or alternatively, the training data may for example comprise unlabelled training data used for unsupervised learning. The training data may for example comprise metal-free training data associated to at least one metal-free training object and may comprise the detection data derived by the metal detector unit, when the at least one metal-free training object is transported through the metal detector unit. Additionally, and/or alternatively, the training data may for example comprise synthetic data created by a training data generation software module. The synthetic data may comprise metal training data associated to at least one metal-containing training object.

At step S2, the training data is used for generating the first machine learning module by machine learning. That is, the first machine learning module is trained by using the training data. In one example, the first machine learning module may comprise a neural network, preferably a deep neural network and the training data may comprise labelled training data used for training of the neural network.

Once training is completed, the trained first machine learning module is deployed to the electronic data processing means at step S3. At step S4, detection data is created by transporting the object to be inspected through the metal detector unit. The metal detector unit may be the metal detector unit shown in Fig. 1.

The detection data created at step S4 is then processed by the first machine learning module (step S5) to automatically identify the presence of metal in the object on the basis of the detection data. At step S6, the first machine learning module outputs identification data indicative of the presence of metal identified by the first machine learning module.

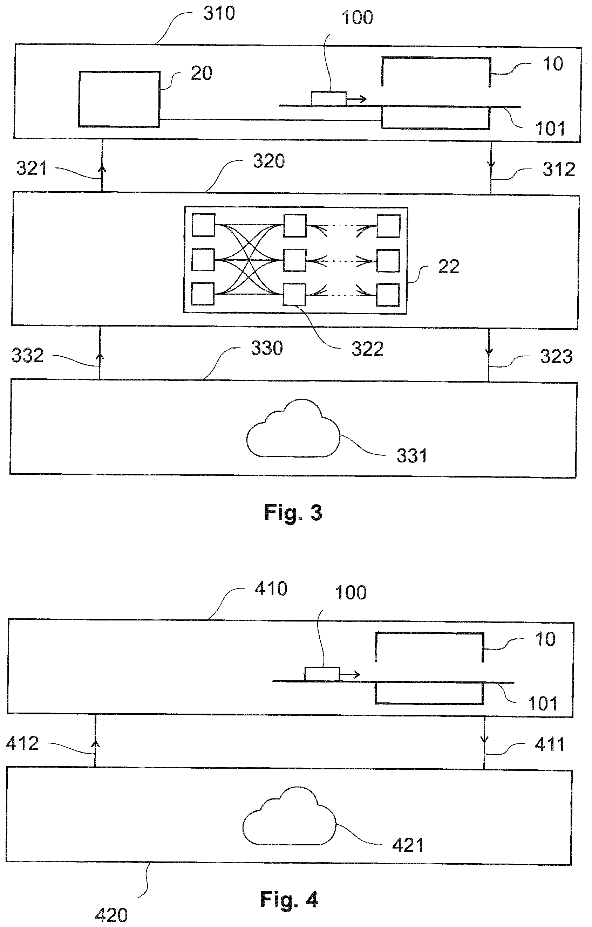

Fig. 3 schematically illustrates a first embodiment, wherein the first machine learning module is trained at a host location and deployed to an edge location. The embodiment shown in Fig. 3 may be understood as Product Set Up as a Service. In Fig. 3, three different locations, namely an edge location 310, a lab location 320 and a cloud location 330, are shown. At the edge location 310, at least one metal detector unit 10 and electronic data processing means 20 are located. The electronic data processing means 20 processes the detection data created by the metal detector unit 10 when the object 100 is transported by the belt conveyor 101 along its transport path. The electronic data processing means 20 may be accelerated by a tensor processing unit (TPU), a specially designed chip for deep learning desired computation. The edge location 310 may be a location within a factory. Training data comprising data created by the metal detector unit is communicated to the lab location 320, for example via a network connection 312, for example a wireless data network connection. At the lab location 320, a research team may design a first machine learning module, for example a deep neural network model 322 with parameters to be determined by training. The deep neural network model 322 and the training data may be provided via a network connection 323, for example a wireless network connection, to the cloud location 330. At the cloud location 330, the deep neural network model 322 may be trained in the cloud computer 331 using the training data. When the computation is finished, the trained deep neural network may be provided via a network connection 332, for example, a wireless network connection, to the lab location 320, where an optimal trained deep neural network may be selected. Alternatively, another deep neural network model 322 for training may be designed based on the trained neural networks and training may be repeated. Then, the selected deep neural network is communicated to the electronic data processing means 20 located at the edge location 310 via a network connection 321, for example a wireless network connection. The trained deep neural network may be used at the edge location 310 for the method according to the first aspect of the present invention.

Fig. 4 schematically illustrates an embodiment, wherein training of the first machine learning module and processing of the provided detection data using the trained first machine learning module is carried out at the cloud location. As it is shown in Fig. 4, a metal detector unit 10 is provided at an edge location 410, and an object 100 is transported by a belt conveyor 101 along a transport path (see arrow for direction of transport) through the metal detector unit 10. In this embodiment, the metal detector unit 10 creates detection data and communicates the detection data to the cloud location 420 in real time via a network connection 411, preferably a wireless network connection. A cloud computer 421 is located at the cloud location 420. Training of the first machine learning module, for example a deep neural network, is carried out by the cloud computer 421 and also the processing of the provided detection data for the identification of metal in the object is carried out by the cloud computer 421 which executes the trained first machine learning module. Thus, the cloud computer 421 provides a remote service for the metal detector unit 10 located at the edge location 410. The identification data output of the cloud computer 421 may then be communicated via a network connection 412, preferably a wireless network connection, to the edge location 410.

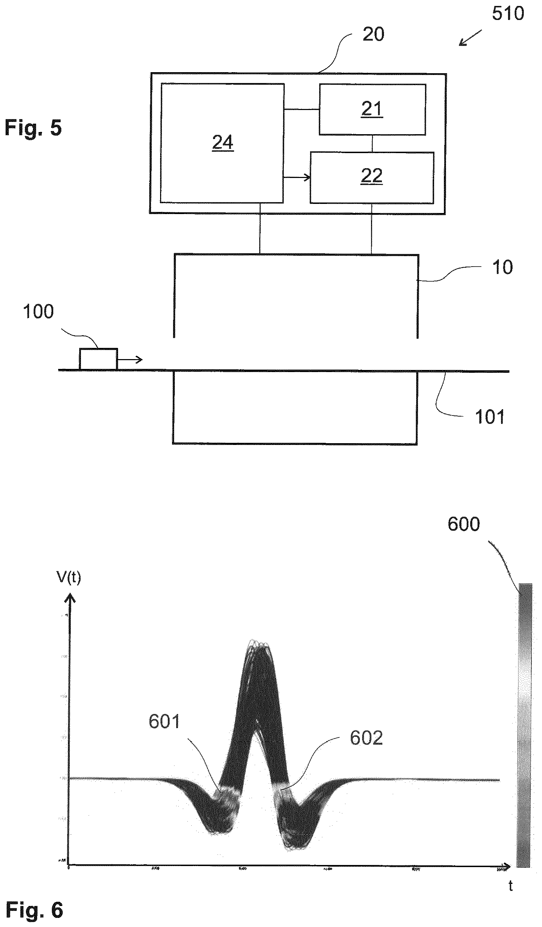

Fig. 5 schematically illustrates an embodiment, wherein the first machine learning module is trained at the edge location. As it is shown in Fig. 5, a metal detector unit 10 and electronic data processing means 20 are located at an edge location 510. An object 100 is transported by a belt conveyor 101 along a transport path (direction indicated by the arrow) through the metal detector unit 10, thereby creating detection data. The detection data may serve as training data which is provided to a training software module 24 executed by the electronic data processing means 20. The training software module 24 receives the training data as an input and creates a first machine learning module 22 trained to automatically identify the presence of metal in the object 100 on the basis of the detection data and to output identification data indicative of the presence of metal in the object. Once training is completed, the training software module 24 is operative to deploy said first machine learning module 22 for execution by the electronic data processing means 20. Then, an object 100 to be inspected is transported by the belt conveyor 101 along the transport path through the metal detector unit 10, thereby creating detection data. Said detection data is provided to said first machine learning module 22 for data processing to thereby obtain identification data indicative of the presence of metal identified by said first machine learning module 22.

Fig. 6 is a plot of a first example of detection data obtained by transporting a plurality of objects of one object class through the metal detector unit. The X-axis of Fig. 6 is the time, and the Y-axis is the electrical signal, in this case, a voltage signal V(t) obtained as the detection data from a metal detector unit comprising a balanced coil system. Each line in the plot corresponds to detection data obtained for a single object. Reference numeral 600 depicts an activation mask for the detection data which indicates the activation level at every instance of the detection data to thereby predict the position of the metal contaminant in the object. The activation mask may be the output of a neural network and may indicate a contribution (a score from 0 to 1) of each temporal point of the detection data to a final classification - i.e., metal or metal-free. If in some temporal region the activation values are high for the class of metal contaminant, one may infer that a metal contaminant is present in a spatial region of the object corresponding to the temporal region of the detection data. In this way, one may localize the contaminant. In Fig. 6, reference signs 601 and 602 indicate the region of a high value of the activation mask.

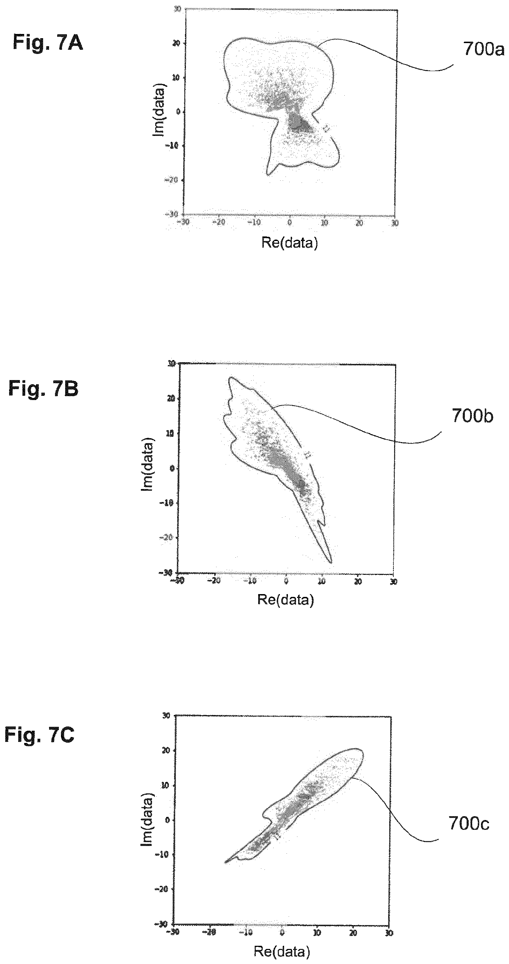

Figures 7A, 7B and 7C are plots of a second example of detection data associated to metal-free objects from three different classes, respectively. The X- and Y-axis denote the real part and the imaginary part of a phasor expression of the impedance data at different points and time. Fig. 7A is a plot for lasagne, Fig. 7B is a plot for grated cheese and Fig. 7C is a plot for chicken. Each point in the plots is an impedance data point for a metal-free object at a certain time. The data is metal-free detection data obtained by transporting a plurality of metal-free training objects through the metal detector unit. Then, a probability density function for the metal-free detection data is generated by machine learning using the metal-free training data. To this end, a probability density model function, for example, a mixture of Gaussian functions parametrised by sets of model parameters, is provided. Then, the values of the model parameters are determined such that the probability density function defined as the probability density model function for the values of the parameters is in accordance with said metal-free training data. I.e., the probability density function is estimated. A threshold value for the probability density function is determined by a user. In this way, a first machine learning module is created which is operative to calculate a probability value of the probability density function for received detection data and to output identification data comprising data representative of the presence of metal in said object if the probability value is above the predefined threshold value. In Figs 7A-C, probability boundaries 700a, 700b and 700c are illustrated. Detection data points that lie outside these boundaries indicate a metal content in the object.

### Reference signs list

- 1: system
- 10: metal detector unit
- 11: source unit
- 12: receiver unit
- 20: electronic data processing means
- 21: CPU
- 22: first machine learning module
- 23: second machine learning module
- 24: training software module
- 30: sensor unit
- 40: display unit
- 100: object
- 101: belt conveyor
- 310: edge location
- 312, 323, 332, 321: network connection
- 320: lab location
- 322: deep neural network
- 330: cloud location
- 331: cloud computer
- 410: edge location
- 420: cloud location
- 421: cloud computer
- 411, 412: network connection
- 510: edge location
- 600, 601: region of high value of the activation mask
- 700a, 700b, 700c: probability boundary

## Claims

1. Computer-implemented method for detecting the presence of metal in an object (100) transported, preferably by a belt conveyor (101), along a transport path through a metal detector unit (10), said method comprising:
providing detection data to electronic data processing means (20), said detection data being created by the metal detector unit (10), the metal detector unit (10) comprising a source unit (11) for an electromagnetic field and a receiver unit (12) electromagnetically coupled thereto, wherein said source unit (11), said receiver unit (12) and said transport path are arranged relative to each other so as to output an electrical signal dependent on a metal content within said object (100), said metal detector unit (10) being further operative to derive said detection data from said electrical signal;
processing the provided detection data by a metal detection software module executed by the electronic data processing means (20, 331, 421), said metal detection software module comprising a first machine learning module (22) receiving said detection data as an input and having been trained to automatically identify the presence of metal in the object (10) on the basis of said detection data, said first machine learning module (21) being further configured to output identification data indicative of the presence of metal identified by said first machine learning module (22).

2. Method according to claim 1, wherein said training comprises creating said detection data at a remote location (310, 410) and communicating the created detection data to a host location (330, 420) where it is used as training data for machine learning to thereby train the first machine learning module (22), said first machine learning module (22) being deployed to the electronic data processing means (20, 331, 421).

3. Method according to claim 1 or 2, wherein said first machine learning module (22) comprises a neural network, preferably a deep neural network, trained for the automatic identification of the presence of metal in the object (100) on the basis of said detection data by using labelled training data.

4. Method according to claim 3, wherein said labelled training data comprises metal-free training data associated to at least one metal-free training object (100) and/or metal training data associated to at least one metal-containing training object, wherein the metal-free training data comprises the detection data derived by the metal detector unit (10) when the at least one metal-free training object (100) is transported through the metal detector unit (10) and/or wherein said metal training data comprises synthetic data created by a training data generation software module.

5. Method according to claim 3 or 4, wherein said neural network is further configured to generate an activation mask (600) for the detection data which indicates an activation level at each instance of the detection data to thereby predict the position of metal in the object (100).

6. Method according to anyone of the preceding claims, wherein said first machine learning module (22) is further trained to identify an object class of the object (100) from the detection data and to output object class data indicative of the identified object class.

7. Method according to anyone of the preceding claims, wherein the metal detector software module comprises a filter function for applying interference or noise filtering to the provided detection data and/or the first machine learning module (22) has been trained by using detection data contaminated with interference or noise effects.

8. Method according to anyone of the preceding claims further comprising:
collecting operating status data indicative of the operating status of the metal detector unit (10) by a sensor unit (30);
providing said operating status data to an operating status software module executed by the electronic data processing means (20, 331, 421), said operating status software module comprising a second machine learning module (23) having been trained by machine learning to automatically identify anomalies in said operating status data, wherein said second machine learning module (23) preferably comprises a neural network, more preferably a deep neural network, for said automatic identification of anomalies, said operating status software module being configured to receive said operating status data as an input and to output anomaly data indicative of the presence of an anomaly in said operating status data identified by said second machine learning module (23).

9. Method according to anyone of the preceding claims, wherein connection between said metal detector unit (10) and/or said electronic data processing means (20, 331, 421) and/or said sensor unit (10) and/or said host location (330, 420) is via a network, preferably a wireless network, to thereby enable an exchange of data, in particular said detection data and/or said training data, and/or said identification data and/or said operating status data.

10. Method according to anyone of the preceding claims, wherein said source unit (11) comprises a transmitter coil to which an alternating current is applied to thereby generate a time-dependent electromagnetic field, said receiver unit (12) comprises a balanced coil system, said electrical signal is the difference voltage output of said balanced coil system as a function of time and said detection data preferably comprises a time series of data points which are the real part and the imaginary part of a phasor expression of a function of said difference voltage signal at different points in time.

11. Method according to anyone of the preceding claims, wherein a time-dependent input signal is applied to the source unit (10) to thereby generate a time-dependent electromagnetic field, and wherein said first machine learning module (22) is further trained to determine a reference phase for said electrical signal depending on said input signal on the basis of said detection data.

12. Method according to anyone of the preceding claims, wherein said first machine learning module (22) comprises a probability density function of the metal-free detection data, said probability density function having been generated by machine learning using metal-free training data associated to metal-free objects, said first machine learning module (22) being further operative to calculate a probability value of the probability density function for the received detection data, and wherein the identification data comprises data representative of the presence of metal in said object (100) if the probability value is above a pre-defined threshold value.

13. Method according to claim 12, wherein generation of the probability density function of the first machine learning module (22) by machine learning comprises the following steps:
providing a probability density model function of the detection data parametrized by a set of model parameters;
transporting a plurality of metal-free training objects (100) through the metal detector unit (10) to thereby create metal-free training data comprising the detection data created for the metal-free training objects (100);
determining values of the model parameters so that the probability density function being defined as the probability density model function for said values of the model parameters is in accordance with said metal-free training data and maximize the likelihood;
defining the threshold value given the probability density function.

14. A system (1) for detecting the presence of metal in an object (100), said system (1) comprising:
a metal detector unit (10) comprising a source unit (11) for an electromagnetic field and a receiver unit (12) electromagnetically coupled thereto;
transport means (101), preferably a belt conveyor, to transport the object (100) along a transport path through the metal detector unit (10);
wherein said source unit (11), said receiver unit (12) and said transport path are arranged relative to each other so as to output an electrical signal dependent on a metal content within said object (100), said metal detector unit (10) being further operative to derive detection data from said electrical signal;
electronic data processing means (20, 331, 421) configured to receive said detection data as an input, and to process the provided detection data by execution of a metal detection software module, said metal detection software module comprising a first machine learning module (22) receiving said detection data as an input and having been trained to automatically identify the presence of metal in the object (100) on the basis of said detection data, said first machine learning module (22) being further configured to output identification data indicative of the presence of metal identified by said first machine learning module (22).

15. A computer program for detecting the presence of metal in an object (100), said object (100) being transported, preferably by a belt conveyor (101), along a transport path through a metal detector unit (10), said metal detector unit (10) comprising a source unit (11) for an electromagnetic field and a receiver unit (12) electromagnetically coupled thereto, wherein said source unit (11), said receiver unit (12) and said transport path are arranged relative to each other so as to output an electrical signal dependent on a metal content within said object (100), said metal detector unit (10) being further operative to derive detection data from said electrical signal, said computer program comprising instructions which, when the computer program is executed by a computer, cause the computer to carry out the following steps:
receiving said detection data as an input;
processing the provided detection data by a metal detection software module, said metal detection software module comprising a first machine learning module (22) receiving said detection data as an input and having been trained to automatically identify the presence of metal in the object (100) on the basis of said detection data, said first machine learning module (22) being further configured to output identification data indicative of the presence of metal identified by said first machine learning module (22).
